# EUROPEAN PATENT APPLICATION

(11) **EP 4 675 509 A1**
(43) Date of publication of application: **07.01.2026**
(21) Application number: 24186770.4
(22) Date of filing: 05.07.2024
(51) Int. Cl.: G06N 7/01

(54) **PROCESS MINING AND GENERATIVE AI FOR PROCESS-, AUTOMATION-, AND CONTROL-ENGINEERING WORKFLOW REPLAY, REPRODUCTION, AND GENERATION**

(71) Applicant: ABB SCHWEIZ AG, 5400 Baden (CH)
(72) Inventor: SCHOCH, Nicolai, 69120 Heidelberg (DE); BORRISON, Reuben, 68782 Brühl (DE); TAN, Ruomu, 68309 Mannheim (DE)
(74) Representative: Maiwald GmbH

(57) **Abstract**

There is disclosed a method for saving and utilizing expert process knowledge with regard to industrial plant. The method comprises obtaining first data indicative of historical processes comprising sequences of historical process steps occurred in an industrial plant. The method comprises obtaining second data based on analysing the first data, wherein the second data is indicative of occurrence statistics and thereon-based probabilities for several historical processes and several historical process steps. And the method comprises, based on the second data, suggesting, for at least one of a process step, a sequence of process steps and a process, at least one of a next process step, a next sequence of process steps and a next process. The analysing comprises analysing the first data using process mining and/or processing the first data using generative Al. The suggesting comprises suggesting the at least one of the next process step, the next sequence and the next process by using process mining and/or by using generative Al.

## Description

### FIELD OF THE INVENTION

The invention relates to process mining and generative artificial intelligence for process-, automation-, and control-engineering workflow replay, reproduction, and generation.

### BACKGROUND

An often-reported pain point, both in Process and Automation Engineering (PAEN) as well as in Control Engineering or in Operations, is caused by an aging work force, a global demographic mega trend, that knowledge and experience will leave companies in about ten to fifteen years on average.

For example, when a faceplate, a human machine interface (HMI), etc. is to be created, there may be a question of what typical steps or frequently occurring errors may likely occur?

Hence, it is important to know how to maintain or save knowledge and experience for the company. Reportedly, this is, for example, a foreseeable problem in PAEN, where long-term experts will retire soon, leaving a knowledge and experience gap behind. It would hence be great, if their knowledge and experience, for example, in terms of best practices, common knowledge, rules-of-thumb, faceplate creation processes, handling of alarms or events, reading and executing of guidelines, documents or manuals in the sight of certain situations in a plant, applying standard operating procedures (SOPs), guidelines to alarm or event situations, etc., could be "frozen" and saved. Thus, such "frozen" and saved knowledge and experience could then be "replayed" or "reproduced", when in the future a future, maybe less experienced, engineer or operator has to deal with a similar situation.

Hence, there is a need for saving and utilizing expert process knowledge with regard to industrial plant.

### SUMMARY

In view of the above, it is an object of the present disclosure to overcome at least part of the drawbacks available regarding the saving and utilizing of expert process knowledge with regard to industrial plant.

Therefore, to address one or more of these drawbacks, there is provided, in a first aspect, a method for saving and utilizing expert process knowledge with regard to industrial plant. The method comprises obtaining first data indicative of historical processes comprising sequences of historical process steps occurred in an industrial plant. The method further comprises obtaining second data based on analysing the first data, wherein the second data is indicative of occurrence statistics and thereon-based probabilities for several historical processes and several historical process steps. The method further comprises, based on the second data, suggesting, for at least one of a process step, a sequence of process steps and a process, at least one of a next process step, a next sequence of process steps and a next process. The analysing comprises analysing the first data using process mining and/or comprises processing the first data using generative artificial intelligence (Al). The suggesting comprises suggesting the at least one of the next process step, the next sequence and the next process by using process mining and/or by using generative Al.

Regarding the obtaining of the first data and the second data, such data could be collected by accessing operation logs or standard operating procedures. Such operation logs or standard operating procedures may be created by human experts during an engineering phase, for example during an engineering phase of the industrial plant.

It shall be noted that the first data may comprise the historical processes, which comprises sequences of historical process steps occurred in an industrial plant. Historical processes or process steps may also be understood as past processes or process steps. A sequences of process steps may comprise several process steps in a certain order. The second data may comprise the occurrence statistics and thereon-based probabilities for several historical processes and several historical process steps. The several historical processes may be equal to the historical processes indicated in the first data, or the several historical processes may be less, i.e. a subgroup of the historical processes indicated in the first data. The several historical process steps may be equal to the historical process steps indicated in the first data, or the several historical process steps may be less, i.e. a subgroup of the historical process steps indicated in the first data. Moreover, a process may comprise one or more sequences of process steps, wherein a sequence of process steps may comprise two or more process steps. A sequence of process steps may comprise process steps of several processes, for example of two processes, that are processed (or suggested to be processed) one after the other. A next process step, sequence of process steps or process may also be understood as a subsequent or following process step, sequence of process steps or process. By occurrence statistics it may be meant for example how often (i.e. a number of times for example) certain processes, sequences of process steps and/or process steps occurred in the historical processes (or in one or more preselected groups or pieces of the historical processes). By thereon-based probabilities it may be meant for example a percentage indicative of how likely the certain processes, sequences of process steps and/or process steps occurred in the historical processes (or in one or more preselected groups or pieces of the historical processes).

It shall be noted that by "process", it is meant not only a sequence of actions performed by an operator or engineer. Rather, by "process" it is also meant, along with this, the respectively co-occurring situations, for example, in the form of steps in a faceplate generation process, steps in an HMI creation process, steps in a definition of state machines process, events, alarms, etc. Thus, a process step may be one of the following for example without being limited to that: uploading data, downloading data, reading out an alarm, clicking/toughing/activating a button or selection element on a display, scrolling a mouse wheel, starting a calculation process, starting a generation process, waiting for further instructions, approval or support, do some certain activity or wait for a predetermined time period, inputting information or instructions by use of a keyboard or voice for example, modifying or adapting formulas or parameters, etc. Hence, a sequence of process steps may be any combination of such process steps.

Further, a process may be any combination of such sequence of process steps and/or of such process steps.

Therefore, in view of the term "process", it shall be noted that by "expert process knowledge" it is meant an engineer's or an operator's knowledge and experience, which can be covered and captured, for example, in terms of best ways of dealing with certain situations or circumstances. I.e., typical sequences, things not-to-be-forgotten, again states, events or alarms, and mitigating actions or preventive actions taken by the engineer or operator, i.e. by a human expert. Or in terms of best practices, common knowledge, rules-of-thumb, handling of alarms or events, reading or executing of guidelines, documents or manuals in the sight of certain situations in an industrial plant, applying SOPs or guidelines to alarm or event situations, etc.

The method according to the first aspect is advantageous in that it may participate in enabling to save a human engineer's or human operator's expert knowledge and experience with regard to industrial plant. Thus, it is enabled that other, for example future human engineers or human operators are and/or will be supported during their work by being provided the saved expert knowledge and experience.

According to several examples of the present disclosure, the historical processes, historical sequences and historical process steps may be related to operations made in the industrial plant by one or more knowledgeable persons.

It shall be noted that a knowledgeable person may be an engineer or an operator as mentioned according to several examples of the present disclosure. Moreover, the one or more knowledgeable persons may be preselected persons, which are preselected for example according to their respective level of knowledge or experience.

Hence, since the operations are made by one or more knowledgeable persons, the historical processes, historical sequences and historical process steps may comprise or may be based on extensive and valuable knowledge and experience. Thus, a quality of the saved knowledge and experience is increased.

According to several examples of the present disclosure, the analysing may comprise identifying from the first data at least one of:
- one or more patterns of historical processes,
- one or more patterns of historical process steps,
- one or more sequences of historical processes, and
- one or more sequences of historical process steps.

The second data may further be indicative of results from the identifying.

It shall be noted that the analysing is the analysing of the first data. A pattern of historical processes may comprise that several patterns are used in combination with each other, subsequently one after the other and/or simultaneously. Such use may be related to a predetermined pattern identification threshold for example. For example, it may be assumed herewith as a mere example that a process A was operated or performed for 100 times within a predetermined past time period. It may further be assumed that for 80 times among these 100 times, a process B was started during the process A, and that for 90 times among these 100 times, a process C was started directly subsequently to the process A. Hence, there may be identified a correlation between the process A and the process B, as well as between the process A and the process C (and potentially also between the process B and the process C). Thus, it may be assumed that there is a probability of 80% that a process B will be started in the course of a process A, and that there is a probability of 90% that a process C will start directly subsequently after a process A. Further, in case the predetermined pattern identification threshold for an occurrence of a first process in relation to an occurrence of a second process may be determined at at least 75% for example, the relation between the processes A and B, as well as between the processes A and C may be identified as a pattern.

However, it shall be noted that the identification of patterns is not limited to any specific type of pattern identification. Further, according to several examples of the present disclosure, it is of relevance that patterns may be identified. However, it is of no or only minor relevance for the present disclosure which pattern identification method may be actually used. For example, generative AI may be used for pattern identification. Hence, the above-outlined example is to be understood as a mere non-limiting example only for increasing understandability of the term "pattern".

Said in other words, a pattern may be understood as any relation among two or more processes, sequences of process steps and/or process steps, where the occurrence of a first process, sequence of process steps and/or process step influences occurrences of a second or further processes, sequences of process steps and/or process steps by at least a predetermined degree.

Sequences of historical processes or process steps comprise several historical processes or process steps, which are operated or performed in a certain order.

Hence, more valuable information and insights, i.e. increased knowledge and experience may be obtained from the first data. Thus, support for an engineer or operator is further improved.

According to several examples of the present disclosure, the analysing may further comprise: Further identifying further occurrence statistics and thereon-based probabilities for at least one of:
- the identified one or more patterns of historical processes,
- the identified one or more patterns of historical process steps,
- the identified one or more sequences of historical processes, and
- the identified one or more sequences of historical process steps.

Hence, even more valuable information and insights, i.e. even more increased knowledge and experience may be obtained from the first data. Thus, support for an engineer or operator is even further improved.

According to several examples of the present disclosure, the analysing may further comprise: Extending the process mining by the generative AI and/or extending the generative AI by the process mining; and performing the analysing based on the extending.

It shall be noted that, similarly, also the suggesting may be an extended suggesting. I.e., the suggesting may further comprise extending the process mining by the generative AI and/or extending the generative AI by the process mining; and performing the suggesting based on the extending.

It shall be noted that by extending it may be meant that process mining is used first, and that one or more results obtained from the process mining will then be used by generative AI for further processing (or will be further processed by generative Al). For example, weighted "trees" or structures of several process steps obtained as results from process mining may be used as input data to the generative Al. The generative AI may use these input data for further analysing processes, like pattern identification for example. Similar, by extending it may also be meant that generative AI is used first, and that one or more results obtained from the generative AI will then be used by process mining for further processing (or will be further processed by process mining). By extending it may also be meant a joint or common analysing (or suggesting). In doing so, process mining may be applied on results output from the generative Al.

Hence, due to the extending, the results to be obtained from the analysing (or suggesting) are further improved or an overall processing time may be reduced, since, for example generative AI is applied on already pre-processed data. Thus, a support of an engineer or operator is even further improved, and an analysing may be made more efficient.

According to several examples of the present disclosure, the method may further comprise ranking results obtained from the analysing according to occurrence statistics and thereon-based probabilities and/or according to predetermined ranking criteria; and providing a result of the ranking to a user.

It shall be noted that the predetermined ranking criteria may comprise a ranking according to an engineer's best-practice experiences for example and/or according to predetermined evaluation criteria like an expected degree of complexity, an expected required time amount, an expected vulnerability to alarms, or an expected safety level for example.

Hence, a support to be provided to an engineer or operator is made more transparent. Thus, user friendliness and user acceptability are increased.

According to several examples of the present disclosure, the suggesting may comprise: Using process mining and deriving at least one of:
- several alternative next process steps,
- several alternative next sequences, and
- several alternative next processes.

The suggesting may further comprise suggesting, for the at least one of the next process step, the next sequence of process steps and the next process, a result from the deriving.

Additionally or alternatively, the suggesting may comprise: Using generative AI and predicting at least one of:
- several alternative next process steps,
- several alternative next sequences, and
- several alternative next processes.

The suggesting may further comprise suggesting, for the at least one of the next process step, the next sequence of process steps and the next process, a result from the predicting.

Hence, due to the several alternatives, traceability, user friendliness and user acceptability are further increased.

According to several examples of the present disclosure, the suggesting may further comprise using process mining and deriving a suitability probability for the at least one of the next process step, the next sequence of process steps, the next process, the several alternative next process steps, the several alternative next sequences, and the several alternative next processes. Additionally or alternatively, the suggesting may further comprise using generative AI and predicting a suitability probability for the at least one of the next process step, the next sequence of process steps, the next process, the several alternative next process steps, the several alternative next sequences, and the several alternative next processes.

It shall be noted that the suitability probability may be indicative of a percentage, which indicates a suitability of a process, sequence of process steps and/or process step to be a next process, sequence of process steps and/or process step for a certain process, sequence of process steps and/or process step. By suitability it may be meant for example how efficient, applicable and/or error-resistant a certain next process, sequence of process steps and/or process step may be, based on information obtainable from the historical data or the first data for example.

Hence, due to the improved suggesting, support for an engineer or operator is further improved.

According to several examples of the present disclosure, the method may further comprise ranking the at least one of the next step, the next sequence of process steps, the next process, the several alternative next process steps, the several alternative next sequences, and the several alternative next processes according to their respective suitability probabilities and/or according to predetermined ranking criteria. The method may further comprise providing a result of the ranking to a user.

It shall be noted that, similar to above, the predetermined ranking criteria may comprise a ranking according to an engineer's best-practice experiences for example and/or according to predetermined evaluation criteria like an expected degree of complexity, an expected required time amount, an expected vulnerability to alarms, or an expected safety level for example.

Hence, a support to be provided to an engineer or operator is made more understandable. Thus, user friendliness and user acceptability are increased.

According to several examples of the present disclosure, the method may further comprise receiving user feedback on at least one of:
- the second data,
- a result from the suggesting,
- a result from at least one of the rankings as mentioned above.

The method may further comprise adapting algorithms based on the received user feedback, wherein the algorithms are underlying at least one of:
- the analysing,
- the deriving,
- the predicting, and
- at least one of the rankings.

The method may further comprise performing at least one of the following based on the adapted algorithms:
- the obtaining the second data,
- the suggesting, and
- at least one of the rankings.

Hence, a possibility for incorporating user feedback is provided, thereby potentially leading to increased data quality and/or improved data processing. Thus, a support to be provided to an engineer or operator is further increased in quality.

According to several examples of the present disclosure, the predicting may further comprise tuning parameters of the generative Al; and performing the predicting based on the tuned parameters.

It shall be noted that tuning may in particular comprise fine-tuning.

Hence, the predicting may be adapted according to a user's individual preferences for example. Thus, user friendliness and user acceptability are increased.

According to a second aspect, there is provided a data processing apparatus for saving and utilizing expert process knowledge with regard to industrial plant, the data processing apparatus comprising a processor being configured to carry out the method of the first aspect.

The data processing apparatus according to the second aspect is advantageous in that it may participate in enabling to save a human engineer's or human operator's expert knowledge and experience with regard to industrial plant. Thus, it is enabled that other, for example future human engineers or human operators are and/or will be supported during their work by being provided the saved expert knowledge and experience.

According to a third aspect, there is provided a data processing system for saving and utilizing expert process knowledge with regard to industrial plant. The data processing system comprises a data processing apparatus of the second aspect. Additionally or alternatively, the data processing system comprises means for carrying out the method of the first aspect.

The data processing system according to the third aspect is advantageous in that it may participate in enabling to save a human engineer's or human operator's expert knowledge and experience with regard to industrial plant. Thus, it is enabled that other, for example future human engineers or human operators are and/or will be supported during their work by being provided the saved expert knowledge and experience.

According to a fourth aspect, there is provided an industrial plant comprising a data processing apparatus of the second aspect and/or a data processing system of the third aspect.

By "industrial plant", according to several examples, it may be meant an industrial plant or industrial production plant, comprising one or more pipelines, production lines and/or assembly lines for transforming one or more educts into a product and/or for assembling one or more components into a final product for example. According to several examples, it may be meant an industrial plant in oil industry, in gas industry, in mining industry, in chemical industry, in wind and power industry, or in food and beverage industry.

The industrial plant according to the fourth aspect is advantageous in that it may participate in enabling to save a human engineer's or human operator's expert knowledge and experience with regard to industrial plant. Thus, it is enabled that other, for example future human engineers or human operators are and/or will be supported during their work by being provided the saved expert knowledge and experience.

According to a fifth aspect, there is provided a computer-readable medium comprising instructions which, when executed by a computing system, cause the computing system to perform the method of the first aspect. The computer-readable medium may be transitory or non-transitory, volatile or non-volatile.

The computer-readable medium according to the fifth aspect is advantageous in that it may participate in enabling to save a human engineer's or human operator's expert knowledge and experience with regard to industrial plant. Thus, it is enabled that other, for example future human engineers or human operators are and/or will be supported during their work by being provided the saved expert knowledge and experience.

According to a sixth aspect, there is provided a computer program product comprising instructions which, when executed by a computing system, enable or cause the computing system to perform the method of the first aspect. The computer program product may comprise a computer-readable medium comprising instructions of the computer program product.

The computer program product according to the sixth aspect is advantageous in that it may participate in enabling to save a human engineer's or human operator's expert knowledge and experience with regard to industrial plant. Thus, it is enabled that other, for example future human engineers or human operators are and/or will be supported during their work by being provided the saved expert knowledge and experience.

According to a seventh aspect, there is provided a use of the data processing apparatus of the second aspect, the data processing system of the third aspect, the industrial plant of the fourth aspect, the computer-readable medium of the fifth aspect, and/or the computer program product of the sixth aspect.

The use according to the seventh aspect is advantageous in that it may participate in enabling to save a human engineer's or human operator's expert knowledge and experience with regard to industrial plant. Thus, it is enabled that other, for example future human engineers or human operators are and/or will be supported during their work by being provided the saved expert knowledge and experience.

Optional features of the first aspect may form part of any of the second to seventh aspects, mutatis mutandis.

The method of the first aspect may be at least in parts computer implemented.

The computer-readable medium of the fifth aspect may have stored thereon the computer program product of the sixth aspect.

The term "obtaining", as used herein, may comprise, for example, receiving from another system, apparatus, or process; receiving via an interaction with a user; loading or retrieving from storage or memory; measuring or capturing using sensors or other data acquisition apparatuses.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 illustrates a display of a process mining tool, showing typical steps or actions and circumstances or situations, and the transitions between them, along with transition weights, indicating the frequency or typicality of these transitions;
- Figure 2 schematically illustrates an example for a software GUI to create a control project;
- Figure 3 illustrates a flowchart indicative of a method according to several examples of the present disclosure; and
- Figure 4 shows a block diagram schematically illustrating a data processing apparatus according to several examples of the present disclosure.

### DETAILED DESCRIPTION

An often-reported pain point, both in Process and Automation Engineering (PAEN) as well as in Control Engineering, is caused by an aging work force, a global demographic mega trend, that knowledge and experience leave the company in about 10 to 15 years on average. Based thereon, a question is how to maintain or save the knowledge and experience for the company?

In view thereof, according to several examples of the present disclosure, it is disclosed for example a method, data processing apparatus and data processing system, which may make use of process mining and/or generative artificial intelligence (Al), in order to:
- on the one hand: to understand, analyze, and capture current processes and typical patterns or sequences in these processes, which in turn capture and represent knowledge and experience, for example, in the sense of "unwritten" best practices, or standard operating procedures, or typical sequences of steps, etc.
- on the other hand: to reproduce or replay such respectively learned or analyzed patterns or "token sequences" representing respectively next steps to a sequence of future process steps, in order to thus support future, maybe less-experienced, engineers or operators during their work.

In view of the above, according to several examples of the present disclosure and outlined in more detail, there is provided a method, data processing apparatus and data processing system for example, which may make use of process mining and/or generative Al, in order to thus:
- Firstly, learn typical engineering or operations sequence patterns, procedures and best practices in P&A Engineering, Control Engineering, or Operations, and to then,
- Secondly, make use of these analyzed or learned patterns or sequences in order to generate and thus complete incomplete sequences or patterns.

According to several examples of the present disclosure, the method, data processing apparatus and data processing system for example can be used to show, replay or reproduce the patterns, knowledge and experience of soon-to-be-retired expert engineers or operators, so that also less experienced engineers or operators can make use of it.

By using process mining methods, the system for example therefore firstly understands, analyzes, and captures typical processes and typical patterns or sequences in these processes in engineering and operations.

It shall be noted that by "process", it is meant not only a sequence of actions performed by an operator or engineer. Rather, by "process" it is also meant, along with this, the respectively co-occurring situations, for example, in the form of steps in a faceplate generation process, steps in an HMI creation process, steps in a definition of state machines process, events, alarms, etc.

Like this, an engineer's or an operator's knowledge and experience can be covered and captured, for example, in terms of best ways of dealing with certain situations or circumstances. I.e., typical sequences, things not-to-be-forgotten, again states, events or alarms, and mitigating actions or preventive actions taken by the engineer or operator, i.e. by a human expert. Or in terms of best practices, common knowledge, rules-of-thumb, handling of alarms or events, reading or executing of guidelines, documents or manuals in the sight of certain situations in an industrial plant, applying SOPs or guidelines to alarm or event situations, etc.

According to several examples of the present disclosure, through process mining, and through thus obtaining a view on typical processes in Engineering/Operations, i.e., also what patterns of process steps may happen more often or less often, which buttons or menus may usually be clicked or selected one after another, which typical sequences of actions may be frequently taken for example, to deal with an alarm or event situation for example, a human engineer's or human operator's expert knowledge and experience can be "freezed" and saved.

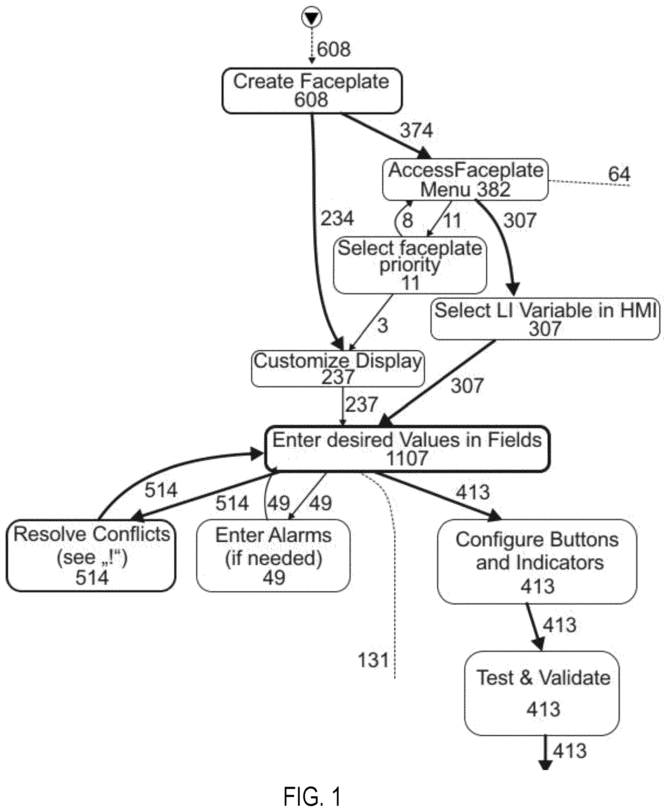

Hence, by using process mining, knowledge and experience can be captured and represented, for example, also in the sense of "unwritten" best practices, or standard operating procedures, or typical sequences of process steps, etc. This is schematically illustrated as in example in Figure 1.

In more detail, referring to Figure 1, Figure 1 illustrates an example display of a process mining tool, showing typical steps or actions and circumstances or situations, and the transitions between them, along with transition weights, indicating the frequency or typicality of these transitions, thus among others also indicating typical best practices or common engineering or operating knowledge.

It shall be noted that the labels of the boxes shown in Figure 1 are not important, and that they may represent any of the above-mentioned button or menu-click-sequences, or frequently-taken actions, etc.

For example, as obtainable from Figure 1, a process to create and configure a faceplate may be indicated for example. The process as shown in Figure 1 may start with the process step or task to create the faceplate. Based thereon, two options are shown as (directly) subsequent processing steps or tasks. For example, an engineer or operator who has already created the faceplate may then "learn" from Figure 1 to either access a faceplate menu or to customize the display. According to several examples of the present invention, however, it shall be noted that the disclosed system may propose or suggest to the engineer or operator to either access a faceplate menu or to customize the display, so the engineer or operator does not need to actually "learn" what a next process step may be. Rather, the disclosed system guides the engineer or operator towards a possible next process step. Thus, the disclosed system can thereon-based, i.e. based on past processes, directly propose, which options (for example the options "access a faceplate menu" and "customize display" as shown in Figure 1) are likely next and with which probabilities. I.e., the engineer or operator not necessarily needs to actively learn this, but can passively get suggestions.

It shall be pointed out for reasons of understandability that the engineer or operator may not necessarily see or even know about such structure as shown in Figure 1. Rather, Figure 1 is to be understood as showing a structure, which the disclosed system obtained or derived from past processes by using process mining and/or generative AI for example. Thus, the disclosed system knowing such structure as shown in Figure 1 for example and knowing that the engineer or operator is at the process step "create faceplate", will propose to the engineer or operator as a next possible process step "access faceplate menu" or "customize display".

It is further derivable from Figure 1 that in the past or in past processes regarding the creation and configuration of a faceplate, to access the faceplate menu was selected more often (382 times out of a total of 608 cases) than to customize the display (237 times out of a total of 608 cases). The engineer or operator may further "learn" from Figure 1 that there are in general several different "ways" (i.e. combinations of subsequent processing steps throughout the tree shown in Figure 1 based on the indicated arrows) available for actually arriving at the processing step "Test & Validate" for example. However, again, it shall be noted that the disclosed system may propose to the engineer or operator such several different "ways" for actually arriving at the processing step "Test & Validate" for example. The engineer or operator does not need to actually "learn" such several different "ways". Rather, the disclosed system guides the engineer or operator towards a possible sequence of next process steps. Thus, the disclosed system can thereon-based, i.e. based on past processes, directly propose, which sequences of next process steps are likely next and with which probabilities. I.e., the engineer or operator not necessarily needs to actively learn this, but can passively get suggestions.

It shall be pointed out for reasons of understandability that also for the suggesting of sequences of next process steps or even for the suggesting of sequences of one or more next entire processes, the engineer or operator may not necessarily see or even know any structure as similar to such structure as shown in Figure 1. Rather, Figure 1 is to be understood as showing a structure, which the disclosed system obtained or derived from past processes by using process mining and/or generative AI for example. Thus, the disclosed system knowing such structure as shown in Figure 1 for example and knowing that the engineer or operator is at the process step "create faceplate", may propose to the engineer or operator as possible sequences of next process steps several different "ways" for actually arriving at the processing step "Test & Validate" for example.

Hence, a "typical" way may be the following order of processing steps: Create Faceplate 4 Access Faceplate Menu 4 Select LI Variable in HMI 4 Enter desired Values in Fields 4 Resolve Conflicts 4 Enter desired Values in Fields →Configure Buttons and Indicators → Test & Validate.

In contrast thereto, a "less typical" way may be the following order of processing steps: Create Faceplate 4 Access Faceplate Menu 4 Select faceplate priority 4 Customize Display 4 Enter desired Values in Fields 4 Enter Alarms 4 Enter desired Values in Fields 4 Configure Buttons and Indicators → Test & Validate.

It shall be noted that according to several examples of the present disclosure, by "typical" it is meant more often, more frequently, more likely, having a higher occurring rate, etc. Said in other words, a typical process for example may be understood as a process that occurs more often than other processes. Other process may be understood as any other processes. Moreover, other processes may further be understood as processes that start from a same start processing step as the typical process and arrive at a same end processing step as the typical process but, in doing so, chose different ways for arriving from the start processing step to the end processing step for example, wherein such different ways were selected less often in the past, as outlined above with reference to Figure 1 as an example.

Hence, said in other words, such structure or tree of processing steps as shown in Figure 1 for example may represent a graphical representation of knowledge and experience of how to create and configure a faceplate, wherein the knowledge and experience is obtained from past or historical processes performed in an industrial plant context by engineers or operators. However, it shall be noted that the knowledge and experience may not need to be represented in a graphical way. The information displayed or contained in the graphical representation may also be provided in a mere textual manner for example, or even in a rather abstract embedding manner. It shall be noted here that the notion of "embedding" refers to its meaning in the "Generative Al" context..

Therefore, said in other words, such structured knowledge and experience may be used as support in any future processes or sequences of processing steps. For example, in case a future sequence of processing steps may comprise the processing steps "Create Faceplate 4 Access Faceplate Menu", it may be suggested based on the knowledge and experience underlying the structure shown in Figure 1, that a potential next processing step may be to "Select LI Variable in HMI".

It shall further be noted that when it comes to making use of the process patterns, not for analysis purposes but for building thereon-based reproduction aspects, alternatively to standard Process Mining (PM) tools (like Disco or Celonis for example), it may also be made use of Generative AI methodology. I.e., Tokenization and Generation of Most-likely-Token-Sequences. Thus, instead of predicting a next (potentially most probable) word, to predict the next (potentially most probable) action, mouse click/click or step in a process of actions, clicks or steps. This may correspond to the path between nodes in PM tools with the thickest or highest weight, and using higher "temperature" values for the Generative AI engine, one might allow for "creativity", in the sense of also trying out less-frequently happening patterns or sequences of actions, clicks or steps etc. For example, with regard to Figure 1, a lower "temperature" may result in such "typical" way as outlined above with reference to Figure 1, wherein a higher "temperature" may result in such "less typical" way as outlined above with reference to Figure 1.

It shall be noted that adapting or setting the "temperature" values may be understood as tuning parameters of the generative Al; and as performing a predicting of a next process, sequence of process steps or process step based on the tuned parameters.

According to several examples of the present disclosure and outlined in more detail, once this knowledge and understanding of typical processes or sequences in a PAEN or Control Engineering or Operations Workflow, subsequently, this knowledge can now be used, i.e., be "replayed" or "re-produced" for example, when in the future a future (and maybe less experienced) engineer or operator has to deal with a similar situation for example, like to setup or define interlocks between a set of components in an automation engineering process, to create a faceplate or HMI for a unit in control engineering, maybe in a similar context, or to encounter a similar sequence of events and alarms in a process plant, for example.

Therefore, the system for example as disclosed according to several examples of the present disclosure can make use of two methods:
- as a first method, a search, i.e. database querying for example, for similar situations and sequences of steps in a workflow. For example, it may be searched by querying a database for all situations X in a history database. Given this situation X, it may be searched for all events Y. Given X and Y, it may then be searched for all subsequent alarms Z. Given X,Y,Z, it may be retrieved what actions had been taken in the past. Hence, in this example, the term "similar" may mean situations which comprise X, Y and Z. In general, according to several examples of the present disclosure, processes or sequences of process steps may be "similar", in case they have a predetermined number of same process steps in common for example, or in case they have a same start process step and a same end process step for example.
- as a second method, using generative Al, in the sense of having a machine learning /artificial intelligence (ML/AI) model, for example based on a transformer neural network (NN) architecture, which (optionally) has been pre-trained and fine-tuned on such typical sequences of button-clicks or menu-click-steps or settings-confirmations, events, alarms or circumstances, in a same way as large language models (LLMs) have been trained on text or tokens. And which may have hence learned to predict a next action, (mouse) click, step, action or state etc. in a sequence of actions, (mouse) clicks, steps, states, events or circumstances etc. just as an LLM may predict a next most-probable word. And which may hence generate a next action, (mouse) click, state, event or control "token", wherein token shall be understood as a next action, a next (mouse) click, a next step, a next event or a next state-change etc.

Hence, the system as disclosed according to several examples of the present disclosure can reproduce or replay the respectively analyzed, found or learned patterns or "token sequences" representing respectively next steps to a sequence of future process steps, in order to thus support future engineers or operators during their work.

It shall be noted that it may be trained or fine-tuned a generative AI/ML model part of the system, for example, by means of feeding, as training data, among others:
- books, literature, manuals or guidelines about engineering know-how and software tools, for example, used in engineers' or operators' education or apprenticeships; or
- "cook books" for engineers, which provide basic patterns, click sequences, step sequences or action sequences, and best practices, sometimes even with if-else cases, possibly including rankings; or
- project data, such as control narratives, etc.

Hence, according to several examples of the present disclosure, such trained or fine-tuned generative AI/ML model may process historical data (or first data) indicative of past processes, of past sequences of process steps and of past process steps to identify for example patterns of processes, of sequences of process steps and of process steps in these historical data. For example, there may be a first part of the first data and a second part of the first data, wherein the first part of the first data may be used for training or fine-tuning a (probably even untrained) generative AI/ML model, which may then identify such patterns in the second part of the first data.

According to several examples of the present disclosure, the method or system may further include a ranking or ordering, which may represent a likelihood of a pattern and a respective next step, i.e. frequencies of analyzed sequences, corresponding for example to the weights in process mining. Or which may represent some assessment or rating of a set of human engineers or operators, which rate patterns or best practices.

Additionally, according to several examples of the present disclosure, a feedback loop may further be provided for receiving and incorporating user feedback, which may enable the experienced engineer or operator to assess the system's suggested next step or steps, which in turn had previously been process-mined, where the assessment includes both confirmation or disconfirmation and improvement or correction of these suggested steps. Thus, the overall system can iteratively be improved. This may hence lead to generation of advanced or experience-based SOPs, or advanced or experience-based best practices. Such user feedback may be directed, for examples, to algorithms that are used for analysing processes, suggesting processes, deriving processes, predicting processes and/or ranking processes. Hence, said in other words, a user feedback may be used to modify or adapt algorithms that are used for calculation processes. Based thereon, results to be obtained based on such calculation processes are modified or adapted based on the received user feedback.

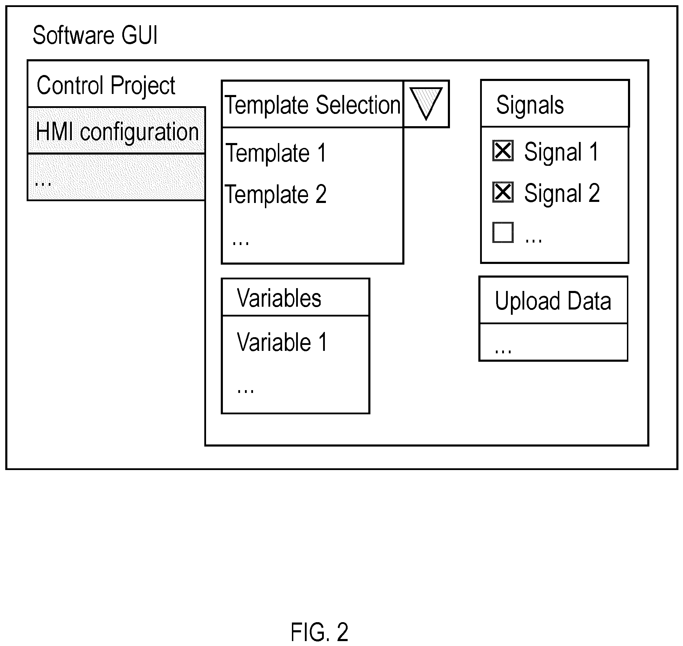

Referring now to Figure 2, Figure 2 schematically illustrates an example for a software GUI to create a control project. Application of the above-outlined system on the software GUI illustrated according to Figure 2 may be as follows, according to several examples of the present disclosure.

First, the engineer may input to the system: I want to create a control project for customer xyz of their plant abc. What do I need to do?

A recommendation to be received from the system may be as follows: Given the requirements, I recommend you to first pick the "Template 1". This is frequently used when configuring for customer xyz their plants that are similar to plant abc.

In a subsequent step, the system may further recommend: Then you need to check the control narrative solution for the plant. Now please upload the control narrative from the customer. I will guide you through it to implement all the required control loops.

In a subsequent step, the system may then further recommend: This section is about the level in the separator tank. Please create two signals, naming "signal 1" and "signal 2", for the level; the corresponding controlled variable should be "variable 1". Then they are connected to the control loop...

According to another example, the engineer may further input to the system: I also want to create the faceplate for the controlled variable 1. What do I need to do?

A recommendation to be received from the system may be as follows: To configure the faceplate of a controlled variable, you can follow the steps outlined below:
a) Access the Faceplate: Select "faceplate 1" in the HMI to open the faceplate, as highlighted.
b) Customize Display Elements: Customize the display elements in the faceplate to show the desired information. For this variable, it is recommended to have current value, setpoint, high/low limits, and status of the control loop.
c) Configure Buttons and Indicators: Configure buttons and indicators in the faceplate to enable control actions and display the status of "faceplate 1". This can include buttons for start/stop/pause, manual/auto modes, and indicators for status conditions.
d) Define Parameter Configuration: Configure the parameters, such as setting the range, type, and other properties of the level measurement.
e) Test and Validate: Thoroughly test and validate the configured faceplate to ensure that it functions correctly and meets the requirements. This includes checking the interaction of buttons, indicators, and other elements with the controlled variable.

According to several examples of the present disclosure, alternative or complementary approaches may be as follows. Namely, generally, for the purpose of the present disclosure, there may be considered two alternative or complementary approaches:
- First, to use a dedicated PM tool (like Disco for example) to analyze (analyze patterns for example) and/or to generate (reproduce or replay for example) the processes as indicated above. It shall be noted that as a sub-technique of PM, a same result may be achieved purely-statistically, based on statistical analysis and deriving a most-likely workflow for example.
- Second, to use generative AI with tokenization of process steps, so it is analyzed (i.e. it is learned embedding representations) and/or it is generated respectively most likely next step(s), as in text generation, but now with process steps generation.

As an alternative to Al-based approaches, the experienced engineer or operator could also manually describe and/or hard-code the SOP or workflow. However, there is the disadvantage that this would be static.

According to several examples of the present disclosure, it shall further be noted that there may be obtained different outputs from the disclosed method or system for example. Namely, as a result from the system, it could be yielded a step-by-step approach for implementation, or a fully-filled template approach.

Therefore, in view of the above, there is provided according to several examples of the present disclosure, a method, data processing apparatus and data processing system to support P&A Engineers, Control Engineers, and Operators, for example after their more-experienced colleagues have retired. Wherein this method, data processing apparatus and data processing system may make use of process mining and/or generative Al, in order to:
- on the one hand: understand, analyze, and/or capture current processes and typical patterns or sequences in these processes, which in turn capture and represent knowledge and experience, for example, in the sense of "unwritten" best practices, or standard operating procedures, or typical sequences of steps, etc.
- on the other hand: reproduce or replay the respectively learned, analyzed patterns or "token sequences" representing respectively next steps to a sequence of future process steps, in order to thus support future engineers or operators during their work, which may be less experienced.

With the method, data processing apparatus and data processing system implemented, as a benefit, both internal users as well as customers will obtain a method, data processing apparatus or data processing system to help reproduce or replay knowledge and/or typical patterns or sequences of processes, possibly without having the expert by the side.

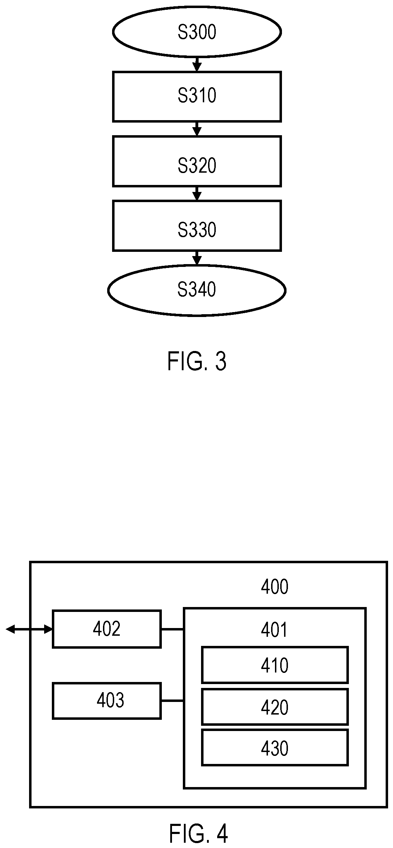

Referring now to Figure 3, Figure 3 illustrates a flowchart indicative of a method according to several examples of the present disclosure. The method is a method for saving and utilizing expert process knowledge with regard to industrial plant.

The method starts in S300.

In S310, the method comprises obtaining first data indicative of historical processes comprising sequences of historical process steps occurred in an industrial plant.

In S320, the method comprises obtaining second data based on analysing the first data, wherein the second data is indicative of occurrence statistics and thereon-based probabilities for several historical processes and several historical process steps.

In S330, the method comprises, based on the second data, suggesting, for at least one of a process step, a sequence of process steps and a process, at least one of a next process step, a next sequence of process steps and a next process. The analysing comprises analysing the first data using process mining and/or processing the first data using generative Al. The suggesting comprises suggesting the at least one of the next process step, the next sequence and the next process by using process mining and/or by using generative Al.

The method ends in S340.

Referring now to Figure 4, Figure 4 shows a block diagram schematically illustrating a data processing apparatus 400 according to several examples of the present disclosure. In particular, according to several examples of the present disclosure, there is provided a data processing apparatus 400 for saving and utilizing expert process knowledge with regard to industrial plant. The data processing apparatus 400 comprises a processor 401 being configured to carry out the method of Figure 3.

In more detail, according to various examples, a data processing apparatus 400 being configured to carry out the method of Figure 3 may comprise a processing circuitry, a processing function, a processing means, a processing unit or a processor 401, which enables the data processing apparatus 400 to participate in saving and utilizing expert process knowledge with regard to industrial plant. The processor 401 may comprise one or more processing portions or functions, wherein the processing portions or functions may be provided as one or more physical or virtual entities. The data processing apparatus 400 may comprise one or more communication interfaces 402.

The data processing apparatus 400 may further comprise a memory or memory unit 403 for storing data, programs and/or instructions to be executed by the processor. The memory 403 may be a memory internal to the data processing apparatus 400 or may be a memory external to the data processing apparatus 400, for example at a cloud server. The processor 401 may comprise one or more portions, which enable the data processing apparatus 400 to execute the method of Figure 3 for example. According to several examples of the present disclosure, an obtaining portion 410 may be configured to perform such obtaining according to S310 of Figure 3, an obtaining portion 420 may be configured to perform such obtaining according to S320 of Figure 3, and an analysing portion 430 may be configured to perform such analysing according to S330 of Figure 3.

According to several examples of the present disclosure, the respective portions of the data processing apparatus 400 may also be understood as means for carrying out the certain function.

According to several examples of the present disclosure, there is provided a data processing system for saving and utilizing expert process knowledge with regard to industrial plant. The data processing system comprises the data processing apparatus 400 according to Figure 4 and/or comprises means for carrying out the method according to Figure 3.

According to several examples of the present disclosure, there is provided an industrial plant comprising the data processing apparatus 400 according to Figure 4 and/or the data processing system as outlined above.

According to several examples of the present disclosure, there is provided a computer-readable medium comprising instructions which, when executed by a computing system, causes the computing system to perform the method according to Figure 3. The computer-readable medium may be transitory or non-transitory, volatile or non-volatile.

According to several examples of the present disclosure, there is provided a computer program product comprising instructions which, when executed by a computing system, enable or cause the computing system to perform the method according Figure 3. The computer program product may comprise a computer-readable medium comprising instructions of the computer program product. The computer-readable medium as mentioned above may have stored thereon the computer program product.

According to several examples of the present disclosure, there is provided a use of the data processing apparatus 400, the data processing system as outlined above, the industrial plant as outlined above, the computer-readable medium as outlined above and/or the computer program product as outlined above.

The method according to Figure 3 may be at least in parts computer implemented.

Optional features of the method according to Figure 3 may form part of the data processing apparatus 400, the data processing system, the industrial plant, the computer-readable medium, the computer program product, and the use, mutatis mutandis.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

## Claims

1. A method for saving and utilizing expert process knowledge with regard to industrial plant, the method comprising:
obtaining (S310) first data indicative of historical processes comprising sequences of historical process steps occurred in an industrial plant;
obtaining (S320) second data based on analysing the first data, wherein the second data is indicative of occurrence statistics and thereon-based probabilities for several historical processes and several historical process steps; and
based on the second data, suggesting (S330), for at least one of a process step, a sequence of process steps and a process, at least one of a next process step, a next sequence of process steps and a next process,
wherein the analysing comprises analysing the first data using process mining and/or processing the first data using generative artificial intelligence, Al,
wherein the suggesting comprises suggesting the at least one of the next process step, the next sequence and the next process by using process mining and/or by using generative Al.

2. The method according to claim 1, wherein the historical processes, historical sequences and historical process steps are related to operations made in the industrial plant by one or more knowledgeable persons.

3. The method according to claim 1 or 2, wherein the analysing comprises identifying from the first data at least one of:
one or more patterns of historical processes,
one or more patterns of historical process steps,
one or more sequences of historical processes, and
one or more sequences of historical process steps; and
wherein the second data is further indicative of results from the identifying.

4. The method according to claim 3, wherein the analysing further comprises:
further identifying further occurrence statistics and thereon-based probabilities for at least one of:
the identified one or more patterns of historical processes,
the identified one or more patterns of historical process steps,
the identified one or more sequences of historical processes, and
the identified one or more sequences of historical process steps.

5. The method according to any of claims 1 to 4, wherein the analysing further comprises:
extending the process mining by the generative AI and/or extending the generative AI by the process mining; and
performing the analysing based on the extending.

6. The method according to any of claims 1 to 5, further comprising:
ranking results obtained from the analysing according to occurrence statistics and thereon-based probabilities and/or according to predetermined ranking criteria; and
providing a result of the ranking to a user.

7. The method according to any of claims 1 to 6, wherein the suggesting comprises:
using process mining and deriving at least one of
several alternative next process steps,
several alternative next sequences, and
several alternative next processes; and
suggesting for the at least one of the next process step, the next sequence of process steps and the next process a result from the deriving; and//or
using generative AI and predicting at least one of
several alternative next process steps,
several alternative next sequences, and
several alternative next processes; and
suggesting for the at least one of the next process step, the next sequence of process steps and the next process a result from the predicting.

8. The method according to any of claims 1 to 7, wherein the suggesting further comprises:
using process mining and deriving a suitability probability for the at least one of the next step, the next sequence of process steps, the next process, the several alternative next process steps, the several alternative next sequences, and the several alternative next processes; and/or
using generative AI and predicting a suitability probability for the at least one of the next step, the next sequence of process steps, the next process, the several alternative next process steps, the several alternative next sequences, and the several alternative next processes.

9. The method according to claim 8, further comprising:
ranking the at least one of the next step, the next sequence of process steps, the next process, the several alternative next process steps, the several alternative next sequences, and the several alternative next processes according to their respective suitability probabilities and/or according to predetermined ranking criteria; and
providing a result of the ranking to a user.

10. The method according to any of claims 1 to 9, further comprising
receiving user feedback on at least one of
the second data,
a result from the suggesting,
a result from the ranking according to claim 6, and
a result from the ranking according to claim 9;
adapting algorithms based on the received user feedback, wherein the algorithms are underlying at least one of
the analysing,
the deriving,
the predicting,
the ranking according to claim 6, and
the ranking according to claim 9; and
performing at least one of the following based on the adapted algorithms:
the obtaining the second data,
the suggesting,
the ranking according to claim 6, and
the ranking according to claim 9.

11. The method according to any of claims 1 to 10, wherein the predicting further comprises:
tuning parameters of the generative Al; and
performing the predicting based on the tuned parameters.

12. A data processing apparatus (400) for saving and utilizing expert process knowledge with regard to industrial plant, the data processing apparatus (400) comprising a processor being configured to carry out the method of any of claims 1 to 11.

13. A data processing system for saving and utilizing expert process knowledge with regard to industrial plant, the data processing system comprising the data processing apparatus (400) according to claim 12 and/or the data processing system comprising means for carrying out the method of any of claims 1 to 11.

14. A computer-readable medium comprising instructions which, when executed by a computing system, cause the computing system to perform the method of any of claims 1 to 11.

15. A computer program product comprising instructions which, when executed by a computing system, enable and/or cause the computing system to perform the method of any of claims 1 to 11.
